# EUROPEAN PATENT SPECIFICATION

(11) **EP 2 610 724 B1**
(45) Date of publication and mention of the grant of the patent: **05.01.2022**
(21) Application number: 12155813.4
(22) Date of filing: 16.02.2012
(51) Int. Cl.: G06F 9/451, G06F 3/0481

(54) **A system and method for online user assistance**
System und Verfahren für die Online-Benutzerhilfe
Système et procédé d'assistance d'utilisateur en ligne

(30) Priority: 27.12.2011 IN 3675MU2011
(43) Date of publication of application: 03.07.2013
(73) Proprietor: Tata Consultancy Services Limited, 400021 Mumbay (IN)
(72) Inventor: Patri,, Vinay Kumar, 603103 Tamil Nadu (IN); Saravanan,, Rajesh, 603103 Tamil Nadu (IN)
(74) Representative: Potter Clarkson

(56) References cited:
- WO-A1-02/057953
- WO-A2-00/05639
- US-A1- 2003 046 689
- US-A1- 2005 144 004

## Description

### FIELD OF THE INVENTION:

The invention relates to the field of computer graphics based animation. More particularly the present invention relates to a system and method for providing an online audio-visual assistance to a user through a human-like animated character.

### BACKGROUND OF THE INVENTION:

Assisting online users over a website or otherwise with an animated character is a user-friendly technique for guiding the user by facilitating necessary details in order to successfully perform a complex business transaction or process online. While processing or seeking information over a website, users are frequently dropped-out from web-pages or web based applications resulting in a sequential loss and wastage of time and business. The user thus requires a step-wise guidance for successfully completing the business transaction or process. Such online assistance is generally provided in an audio-visual form by the said computer generated animated characters. The online assistance provided to the user brings them to an immense satisfaction as they are able to hear and visualize the answers of their query automatically with the help of the said animated character.

Use of these animated characters is known for assisting the online users, mostly for the websites and online portals. When the user comes across to an existing or a new business process over the websites to which he/she is not aware of, then such animated characters makes it easier and convenient to the user to receive a proper guidance on the screen or display terminals.

One of the known methods for providing an online assistance is guidance to the user through the computer generated animated character, where the said animated characters are capable for assisting the user with preconfigured answers of frequently asked queries related to that business transaction. However, such methods are limited to a particular set of queries which are pre-stored in the database and mapped to their respective answers. Moreover, the animated character remains stationary at a particular position on the screen or the display from where it assists the user using props or written messages. Thus in the prior art there is a lack of ability for virtual movement of such animated character to specific location(s) of the details or the answers which are displayed or can be displayed on the screen.

Hence the lack of virtual movement of the animated character to a specific location on the display or screen still remains a need in the art. Moreover, yet another issue related to ability of the said animated character to assist the user intuitively on the basis of artificial intelligence is an unaddressed problem in the art . So, there is a long felt need for a system and method for providing the advanced audio visual online assistance to the user using an intuitively responsive human-like animated character.

**Document** WO0005639 **(A2)** discloses a system for providing an avatar computer guide system that is integrated with an interactive computer program. The system provides a human or anthropomorphic avatar that moves about the UI screens of a computer program and interacts with various displayed screen elements. As the avatar interacts with the screen elements, it explains and demonstrates how to use the user-activatable screen elements to perform various operations with the computer program. The user-activatable screen elements with which the avatar interacts are the same screen elements with which the user can interact, and these screen elements are selectable by the user at any time. Thus, the avatar acts as a guide to operating the functioning interactive computer program. This guidance from the avatar of the system can supplement a separate help system or eliminate the need for such a system.

Document WO 02/057953 A1 discloses a computing and data communication network a method and system for the implementation of virtual animated characters within network-based applications. On a server system (22) within a data communication network a set of multimedia files (40, 42) representing animated characters, and a set of program routines (38) including an animation engine are established. On the server system a set of application-specific page files (36) is established, designed to be downloaded to a client system (12) in order to drive a specific application. The page files include suitable commands for the downloading of the program and multimedia files to a client system. The page files include commands regarding the execution of the program files. The animation engine including predetermined control tables effect the display/play of the multimedia files in temporal synchronization with the specific application on the client system.

**Document** US2003046689 (A1**)** discloses a virtual environment created through the combination of technologies. The invention employs the knowledge and experience of a Personal Assistant or Host, created through Artificial Intelligence applications, which assists and guides the user of the environment to products and/or services that they will most likely be interested in purchasing or requiring. The intelligent assistant's choices are based on its experiences with the specific user. The intelligent assistant communicates with the user by means of a speech recognition and speech synthesis device. This invention is an easy to use virtual reality environment that takes advantage of existing technologies and global communications networks such as the Internet without requiring any given degree of computer literacy. This invention includes a virtual intelligent assistant for each user which adapts to its user as it provides individualized guidance. The intelligent assistant or avatar projects human-like features and behaviors appropriate to the preferences of its user and appears as a virtual person to the user.

**Document** US 2005/144004 A1 discloses speech recognition system includes distributed processing across a client and server for recognizing a spoken query by a user. A number of different speech models for different languages are used to support and detect a language spoken by a user. In some implementations an interactive electronic agent responds in the user's language to facilitate a real-time, human like dialogue. The document discloses an avatar for assisting a user of a plurality of web pages with an intuitively responsive virtual animated character based upon one or more queries of the user. The system of said document is receiving, by a processor, the one or more queries from the user in at least one of a text format and a speech format, wherein the one or more queries are converted into the text format, when the one or more queries are received in the speech format; performing, by the processor, a text based analytics on the one or more queries, wherein the text based analytics comprises, selecting a plurality of keywords from the one or more queries; and conducting a search in a pre-configured real-time training simulation database using the plurality of keywords in order to identify information pertaining to the one or more queries, wherein the information is associated to one or more web pages of multiple web pages, defining, by the processor, automatically different gestures for the virtual animated character based on context of the one or more queries, wherein the different gestures comprise actions and expressions associated with the virtual animated character. The virtual animated character proposes tips in the form of text to the user, accompanied with speech dialog, in particular confirming appropriate user choice.

### OBJECTS OF THE INVENTION

The primary objective of a present invention is to provide a system and method that enables integration of a computer generated human-like animated character with user queries to assist an online user in finding out appropriate answers therefor using underlying rules engine and a knowledge database in an intelligent manner.

Another object of the present invention is to provide a system and method for providing an audio-visual assistance to the online users using the said human-like animated character which is a programmed interface enabled for quick identification of user queries in a given functional context.

Yet another object of the present invention is to enable the said human-like animated character to virtually walk down to specific location(s) of identified relevant information either displayed or can be displayed on such screen.

Yet another object of the present invention is to enable the method and system for assisting the online users by providing automated answers mined from a real-time training simulation database backed by artificial intelligence.

### SUMMARY OF THE INVENTION

The present invention introduces a system and method for providing an online audio-visual assistance to a user through a computer generated human-like animated character. The saidhuman-like animated character is configured for responding with the cognitive data on the basis of artificial intelligence upon processing the user entered queries in a real-time. On the basis of the context of the queries, the said human-like animated character is further configured for defining different gestures and linking each such gesture with the context of the query for assisting and guiding the user by virtually walking across specific locations of displayed information on screen. In one aspect of the invention the system receives the user query through an input means. The received query as an input can be in a text or voice format. After receiving the query, the input means transmits the data to a remotely located web server where such query is further processed. If the query is the voice format, then the remotely placed web server converts the query into text format using speech-to-text processor in order to further perform text based analytics. The said text analytics based on the artificial intelligence is performed by mining such queries in a preconfigured real-time training simulation database which is stored in a memory of the said web server. With the help of natural language processing and expert systems, the said web server searches and identifies the relevant information and their specific location(s) and travel paths on the display screen. A plurality of historical learning's associated with the identified relevant information is consolidated for providing an audio-visual virtual assistance to the user by converting the consolidated historical learning variables into a speech output and spontaneously synchronizing it with the said human-like animated character. A text-to-speech processor of the said web server is configured for converting the identified relevant information and their specific locations into a voice output providing audio-visual assistance to the user. The said human-like animated character virtually guides the user like a real-life interaction. Control algorithm and rule engine of the said web server are configured for providing a set of instructions to the human-like animated character for directing it to virtually move on the screen. The said sets of instructions are stored in the memory of the rules engine.

On the basis of the context of the query with its corresponding relevant information with its specific locations, the movement of the human-like animated character is decided with a spontaneously determined one or more travel paths of the specific locations of the identified relevant information. Therefore the human-like animated character is directed for spontaneously initiating a planar movement based on a contextually determined one or more travel path displayed on the screen or display Thus, the said human-like animated character guides the user intuitively by physically moving and semantically positioning itself to the one or more specific locations of the displayed relevant information on the screen.

In another aspect the invention the system for providing the audio-visual assistance to the online users based on the artificial intelligence by using the human-like animated character comprises of:
one or more communication devices wirelessly connected by the means of wireless communication with the remotely located web server. The said communication device(s) further comprises:
a display and an input means, whereas the remotely located web server comprises of the data processing unit and a text-to-speech processor.

The said data processing unit comprises an expert system and a rule engine that is interfaced with each other through an expert system interface and control algorithm respectively. The said expert system is coupled with the knowledge database, wherein the said knowledge database is configured for real-time training simulation on the basis of historical learning. The said rule engine is coupled with the behavior rules database, wherein the behavior rules database is also configured for real-time simulation on the basis of historical learning. Thus the said system is configured for assisting and guiding the user in the real-time, artificial intelligence based responses through human-like animated character on the basis of historical learning, wherein the said human-like animated character is configured for virtually walking down to the specific location(s) of the identified relevant information.

### BRIEF DESCRIPTION OF THE DRAWINGS

The foregoing summary, as well as the following detailed description of preferred embodiments, is better understood when read in conjunction with the appended drawings. For the purpose of illustrating the invention, there is shown in the drawings various stages of the invention; however, the invention is not limited to the specific system components and methods disclosed in the drawings.
**Figure 1** is the block diagram of the system (100) illustrating the multiple embodiments of the present invention.
**Figure 2A** **and** **2B** is the illustration of the user assistance method (200) and (300) respectively using a human-like animated character according to one aspect of the present invention.
**Figure 3A** **and** **3B** is the illustration of a user assistance method (400) and (500) respectively using the human-like animated character according to another aspect of the present invention.

### DETAILED DESCRIPTION OF THE INVENTION

The invention generally provides a system and method for assisting online users in real-time with artificial intelligence based responses through a computer generated human-like animated character, characterized by enabling the said human-like animated character to virtually walk down the user to specific location(s) of displayed relevant information on a screen.

In an embodiment of the invention the system comprises a communication device wirelessly connected to a remotely located web server, wherein the said communication device further comprises of a display and an input means.

The input means is capable for receiving user queries in a text format, voice format or a combination thereof. After receiving the queries from the user, the input means transmits the received query to the said remotely located web server, wherein the content of the received query is brought in an appropriate format.

The present invention also enables the user to familiarize with a process. The human-like animated character can actually click open specific tabs and hyperlinks on the web pages narrating the action and subsequent result. On the basis of the context of the queries, the said human-like animated character is configured for defining different gestures and linking each gesture with the contexts of the queries for virtually assisting and guiding the user for successfully performing a business transaction or process. If the received query is in the voice format then with the help of speech-to-text processor, it is converted into the text format and then the web server proceeds for executing text analytics. The expert system and natural language processor embedded within the web server executes the text analytics by searching and identifying the relevant information with their specific locations based on the given queries from a preconfigured real-time training simulation database, wherein the said preconfigured real-time simulation database is stored in memory of the web server. It should be noted that the user is also allowed to provide and receive his queries processed in a real-time as the input after text analytics is taken as a search on the said preconfigured real-time training simulation database.

The identified relevant information and their specific locations are then processed through a text-to-speech processor. The converted format i.e., the speech format of the identified relevant information and their specific locations are then spontaneously synchronized with the human-like animated character.

The said human-like animated character driven by artificial intelligence is further capable for elaborating the details of the identified relevant information located on the web page. The said human-like animated character guides and allows the user to decide and select available options and sequentially displays relevant information over the web page. Further, on the basis of the selected options by the user, the said human-like animated character responds and guides the user like a real-life interaction.

The movement, actions and expressions of the human-like animated character are controlled by control algorithms and rule engine embedded within the web server.

The said control algorithm and rule engine provides a set of processor implemented instructions to the human-like animated character for directing it to virtually move across the screen or the display over the web page with different actions, expressions and mood, wherein the said set of instructions are based on the identified relevant information and their specific locations. On the basis of the query, the said control algorithms and rule engine also determines the one or more travel path and coordinates for the specific locations of the relevant information and simultaneously maps the coordinates with the said human-like animated character. Thus, the said human-like animated character driven by artificial intelligence guides the user audibly and visually by virtually moving or walking down the user along with the spontaneously determined travel path to the specific location of the displayed relevant information on the screen for successfully performing the said business transaction or process.

Next, the preferred embodiments of the present invention will be described below based on drawings.

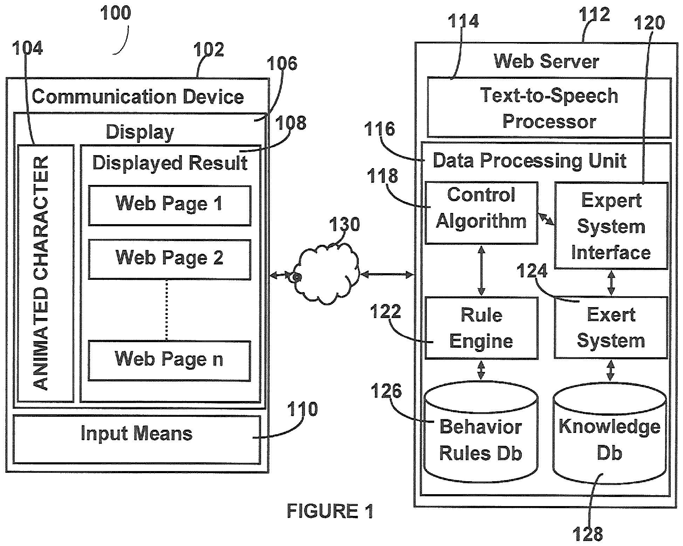

**Figure 1** is the block diagram of a system (100) illustrating the multiple embodiments of a present invention. The system (100) comprises of a communication device, hardware (102) wirelessly connected to a remotely located web server, hardware (112). The said communication device (102) further comprises of a display (106) and an input means (110) whereas the web server (112) comprises of a text-to-speech processor (114) and a data processing unit (116). The said communication device (102) is configured for receiving a user query as an input through the input means (110) and further transmitting it to the remotely located web server (112). The received query could be in a text format, voice format or combination thereof. In the case where the query is in a voice format, a speech-to-text processor (not shown in the figure) embedded within the web server (112) converts the format of the query from voice to text. The data processing unit (116) embedded within the web server (112) is configured for performing text analytics on the converted query in the text format. An expert system (124) using a natural language processing executes the text analytics on the query by selecting the keywords from the context of the query and conducting a search using artificial intelligence in one of the preconfigured real-time training simulation database i.e., knowledge database (128) stored in memory of the web server (112). The said knowledge database (128) updates its information on the basis of historical learning. While conducting the search, the said expert system (124) further process the selected keywords from the context of the query against some predefined business rules of a business process which are stored in an another type of real-time training simulation database i.e., behavior rules database (126) of the web server (112) resulting in a relevant information and their specific locations identified over a web page during the search.

The identified relevant information and their specific locations are then processed through the text-to-speech processor (114). The converted speech format of the identified relevant information and their specific locations are then spontaneously synchronized with the said human-like animated character (104). The said human-like animated character (104) is further configured for speaking out the identified relevant information and virtually guiding the user for successfully performing the said business transaction on the screen.

The said control algorithm (118) and the rule engine (122) provides a set of instructions to the said human-like animated character (104) for directing it to virtually move across the display (108) with different actions, expressions and mood, wherein the said set of instructions are based on the identified relevant information with their specific locations located on the web page. Also, the human-like animated character (104) driven by artificial intelligence is configured for guiding the user by displaying the available options and details of the displayed relevant information and allowing the user to decide and select one or more said available options by the means of the said input means (110). On the basis of the selected options by the user, the said human-like animated character (104) using artificial intelligence virtually responds and guides the user like a real-life interaction.

On the basis of the query, the said control algorithm (118) and rule engine (122) determines the travel path and coordinates of the specific locations of the relevant information and simultaneously maps the coordinates with the said human-like animated character (104). In an another scenario, the said rule engine (122) and the control algorithm (118) determines the travel path and coordinates of the specific locations of the relevant information on the basis of the user selected options which are displayed with at least one relevant information on the screen. Thus, the said human-like animated character (104) guides the user by virtually moving or walking down the user along with the spontaneously determined travel path to the specific locations of the displayed relevant information on the display (106).

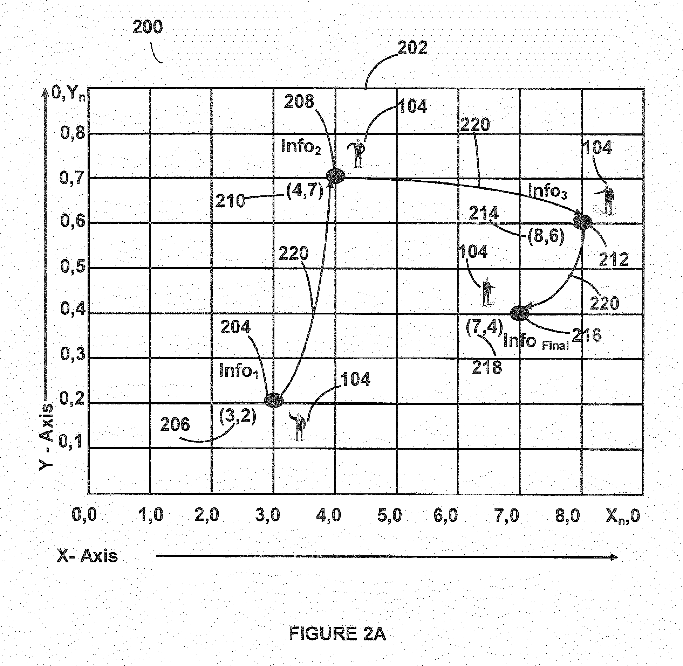

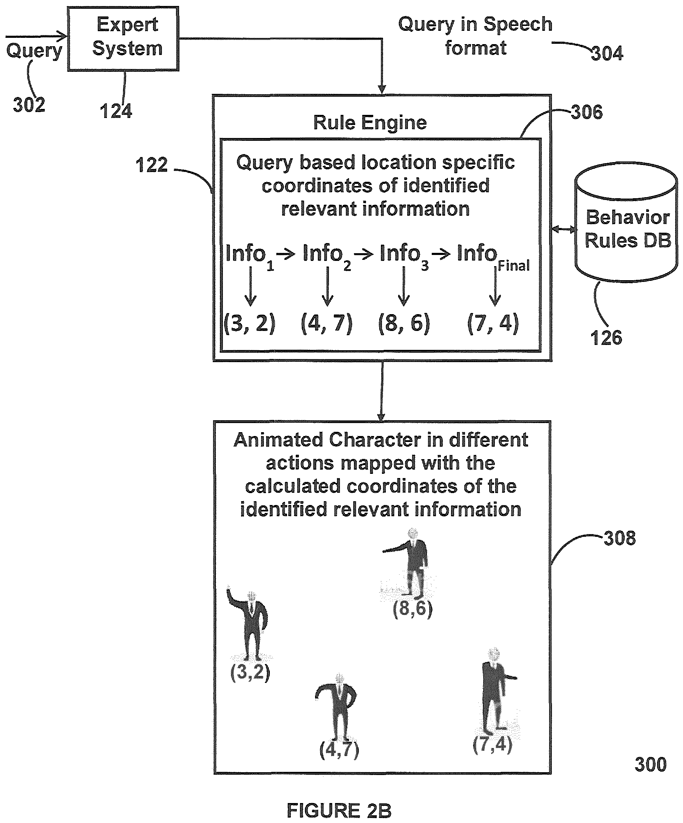

**Figure 2A** **and** **2B** is the illustration of the user assistance method (200) and (300) respectively using a human-like animated character according to one aspect of the present invention. The said user assistance method (200) displays a web page (202) comprising of specific location(s) of identified relevant information and a computer generated human-like animated character (104). An expert system (124 of figure 2B) receives the query (302) from the user and using a natural language processing it performs a text analytics on the received query (302). The received query can be in a text or voice format. If the received query is in voice format then a text-to-speech processor (not shown in the figure) converts the format of the query from voice to text. Further, the said expert system (124 of figure 2B) identifies the relevant information with their specific locations which are further displayed over the web page (202) on the display or screen. The identified relevant information over the web page (202) can be in a form of a text or a web element. Further, the identified relevant information with their specific locations is then processed through the text-to-speech processor (114) and the query in speech format (304 of figure 2B) is passed to the rule engine (122 of figure 2B). The converted speech format of the identified relevant information and their specific locations are then spontaneously synchronized with the said human-like animated character (104). The artificially driven human-like animated character (104) is further configured of speaking out the identified relevant information and guiding and allowing the user to select one or more available options displayed with the identified relevant information for successfully performing a business transaction or a process over the web page (202) displayed on the screen.

Further, the rule engine (122 of figure 2B) along with the control algorithm determines the travel path (220 of figure 2A) and coordinates of the specific locations of the identified relevant information and simultaneously maps the coordinates (306 of figure 2B) with the said human-like animated character (104). Yet, in an another scenario, the rule engine (122 of figure 2B) along with the control algorithm is configured for directing the said human-like animated character to determine the travel path (220) from one relevant information to the another sequenced relevant information on the basis of options selected by the user and responding accordingly. The said human-like animated character (104) automatically converts into gestures in accordance with calculated coordinates over the web page (202) of the specific locations of the identified relevant information displayed on screen or display. The human-like animated characters (104) in different actions and expressions are sequentially mapped with the calculated coordinates of the identified relevant information (308 of figure 2B). The sequentially mapped calculated coordinates of the specific locations of the identified relevant information are displayed on the web page (202).

As shown in figure 2A, the human-like animated character (104) guides the user for successfully performing the business transaction or process, starting from first information **[Info₁]** (204) which is mapped with the calculated coordinates **[3,2]** (206) over the web page (202) and sequentially follows the travel path (220) via second information **[Info₂]** (208) and third information **[Info₃]** (212) to final information **[Info_{Final}**] (216) which is mapped with the calculated coordinates **[7,4]** (218) over the displayed web page (202). Also, the generated human-like animated character (104) automatically detects itself whether it's hiding or standing in front of or hindering the display of any web elements on the screen. Further, it should be noted that, that there could be n number of specific locations depending upon the identified relevant information upon which the said human-like animated character (104) will be capable for guiding the user over the displayed web page (202). Thus, the said human-like animated character (104) driven by artificial intelligence, audio-visually guides the user by virtually moving or walking down the user along with the spontaneously determined travel path (220) to the specific locations of the displayed relevant information over the web page (202) on the display.

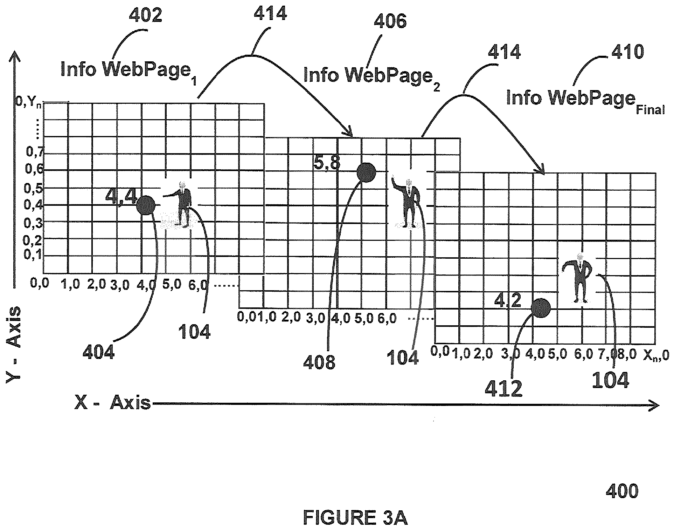

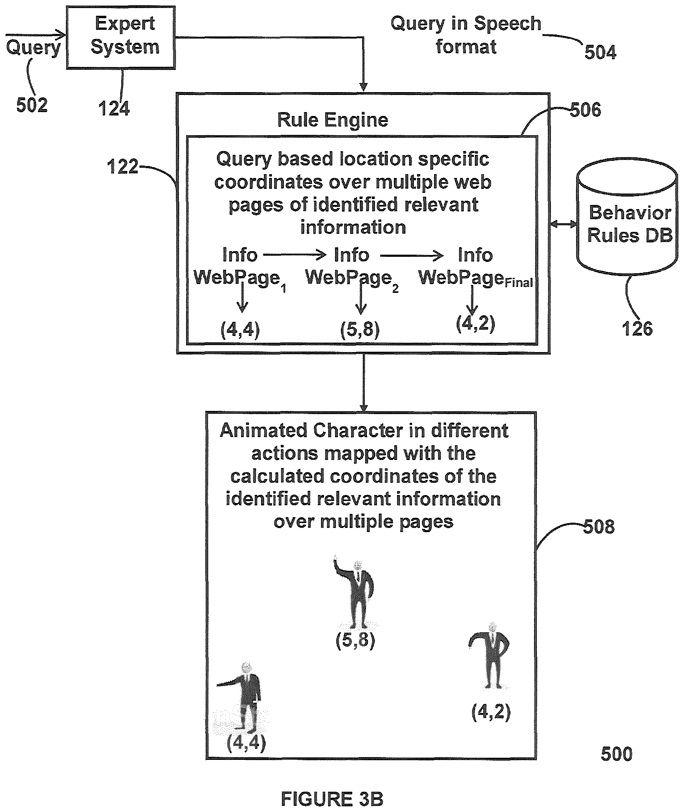

**Figure 3A** **and** **3B** is the illustration of a user assistance method (400) and (500) respectively using the human-like animated character according to another aspect of the present invention. According to this aspect of the present invention, relevant information and their specific locations can be identified over multiple web pages as shown in the figure 3A.

In this case, the user assistance method (400) displays three web pages uploaded sequentially with the identified relevant information and their specific locations.

Here, an expert system (124 of figure 3B) receives the query (502) from the user and using a natural language processing it performs the text analytics on the received query (502). The received query can be in a text or voice format. If the received query is in voice format then a text-to-speech processor (not shown in the figure) converts the format of the query from voice to text. Further, the said expert system (124 of figure 3B) identifies the relevant information with their specific locations which are sequentially uploaded and displayed on screen. The identified relevant information over the said multiple web pages can be in a form of a text or a web element. Further, the identified relevant information with their specific locations is then processed through the text-to-speech processor (114) and the query in speech format (504 of figure 3B) is passed to the rule engine (122 of figure 3B). The converted speech format of the identified relevant information and their specific locations are then spontaneously synchronized with the said human-like animated character (104). Then the human-like animated character (104) driven by artificial intelligence is further configured for speaking out the identified relevant information and guiding the user allowing them to select one or more available options displayed with the identified relevant information for successfully performing a business transaction or a process over the said sequentially uploaded multiple web pages displayed on the screen.

Further, the rule engine (122 of figure 3B) along with the control algorithm determines the travel path (414 of figure 3A) and coordinates of the specific locations of the relevant information and simultaneously maps the coordinates (506 of figure 3B) with the said human-like animated character (104). In an another scenario, the said rule engine (122 of figure 3B) along with the control algorithm is configured for directing the said human-like animated character (104) to determine the travel path from one relevant information to the another sequenced relevant information which is uploaded with the next web page on the basis of the options selected by the user. The said human-like animated character (104) automatically converts into gestures in accordance with the identified coordinates of the specific locations of the identified relevant information over the said sequentially uploaded multiple web pages displayed on the screen or display. The human-like animated characters (104) in different actions are accordingly mapped with the calculated coordinates of the identified relevant information over the multiple web pages (508). The calculated coordinates for the specific locations of the identified relevant information are displayed on the said sequentially uploaded multiple web pages i.e., (402), (406) and (410) on the screen or display.

As shown in figure 3A, the human-like animated character (104) audio-visually guides the user for successfully performing the said business transaction or process, starting from the specific location of the identified relevant information of the first web page i.e., **[Info WebPagei]** (402) which is mapped with the calculated coordinates at **[4,4]** (404) over the said first web page (402) and sequentially follows the spontaneously determined travel path (414) via second web page **[Info Webpage₂]** (406) to the final web page **[Info WebPage_{Final}]** (410) displaying the identified final relevant information which is mapped with the calculated coordinates **[4,2]** (412) displayed on the screen or display. Also, the generated human-like animated character automatically detects itself whether it's hiding or standing in front of or hindering the display of any web elements on the screen. The said human-like animated character also capable for adjusting its position without compromising with the gesture it has to perform, such as pointing towards an area of information displayed on the display or screen. Further, it should be noted that, that there could be n number of web pages and their specific locations depending upon the identified relevant information upon which the said human-like animated character (104) will be capable for guiding the user over the displayed multiple web pages. Thus, the present invention according to this aspect directs the human-like animated character (104) which is artificially driven for guiding the user audibly and visually by virtually moving or walking down the user along with the said spontaneously determined travel path to the specific locations of the displayed identified relevant information over the sequentially uploaded multiple web pages on the display.

In accordance with various embodiments of the present disclosure, the methods described herein are intended for operation as software programs running on a computer processor.

The illustrations of arrangements described herein are intended to provide a general understanding of the structure of various embodiments, and they are not intended to serve as a complete description of all the elements and features of methods and system that might make use of the structures described herein.

Although the invention has been described in terms of specific embodiments and applications, the invention is defined as set forth in the appended claims.

## Claims

1. A method for assisting a user of a plurality of web pages with an intuitively responsive virtual animated character based upon one or more queries of the user, the method comprising:
receiving, by a processor, the one or more queries from the user in at least one of a text format and a speech format, wherein the one or more queries are converted into the text format, when the one or more queries are received in the speech format;
performing, by the processor, a text based analytics on the one or more queries, wherein the text based analytics comprises,
selecting a plurality of keywords from the one or more queries; and
conducting a search in a pre-configured real-time training simulation database using the plurality of keywords in order to identify information pertaining to the one or more queries, wherein the information is associated to one or more web pages of multiple web pages, and wherein the information is located on the one or more web pages based upon location coordinates of the information;
defining, by the processor, automatically different gestures for the virtual animated character based on context of the one or more queries, wherein the different gestures comprise actions and expressions associated with the virtual animated character;
enabling, by the processor, the virtual animated character to intuitively guide the user by showing at least one gesture, of the different gestures, pointing towards a first information present on a first web page of the one or more web pages, wherein the virtual animated character clicks open specific tabs and hyperlinks first information on the web pages narrating the action and subsequent result of the click open to the user, and wherein the first information is a subset of the information; and
initiating, by the processor, the virtual animated character to move from location coordinates of the first information to location coordinates of a second information present on a second web page of the one or more web pages in order to enable the virtual animated character to intuitively guide and address the one or more queries of the user, wherein the second information is another subset of the information.

2. A system for assisting a user of a plurality of web pages with an intuitively responsive virtual animated character based upon one or more queries of the user, the system comprising:
a processor;
a memory coupled to the processor, wherein the processor executes programmed instructions stored in the memory in order to perform steps of:
receiving, by a processor, the one or more queries from the user in at least one of a text format and a speech format, wherein the one or more queries are converted into the text format, when the one or more queries are received in the speech format;
performing, by the processor, a text based analytics on the one or more queries, wherein the text based analytics comprises,
selecting a plurality of keywords from the one or more queries; and
conducting a search in a pre-configured real-time training simulation database using the plurality of keywords in order to identify information pertaining to the one or more queries, wherein the information is associated to one or more web pages of multiple web pages, and wherein the information is located on the one or more web pages based upon location coordinates of the information;
defining, by the processor, automatically different gestures for the virtual animated character based on context of the one or more queries, wherein the different gestures comprise actions and expressions associated with the virtual animated character;
enabling, by the processor, the virtual animated character to intuitively guide the user by showing at least one gesture, of the different gestures, pointing towards a first information present on a first web page of the one or more web pages, wherein the virtual animated character clicks open specific tabs and hyperlinks first information on the web pages narrating the action and subsequent result of the click open to the user, and wherein the first information is a subset of the information; and
initiating, by the processor, the virtual animated character to move from location coordinates of the first information to location coordinates of a second information present on a second web page of the one or more web pages in order to enable the virtual animated character to intuitively guide and address the one or more queries of the user, wherein the second information is another subset of the information.

## Patentansprüche

1. Verfahren zum Unterstützen eines Benutzers mehrerer Webseiten mit einer intuitiv reagierenden virtuellen animierten Figur basierend auf einer oder mehreren Abfragen des Benutzers, wobei das Verfahren Folgendes umfasst:
Empfangen, durch einen Prozessor, der einen oder der mehreren Abfragen von dem Benutzer in einem Textformat und/oder einem Sprachformat, wobei die eine oder die mehreren Abfragen in das Textformat umgewandelt werden, wenn die eine oder die mehreren Abfragen in dem Sprachformat empfangen werden;
Durchführen, durch den Prozessor, einer textbasierten Analyse der einen oder der mehreren Abfragen, wobei die textbasierte Analyse Folgendes umfasst:
Auswählen mehrerer Schlüsselwörter aus der einen oder den mehreren Abfragen; und
Ausführen einer Suche in einer vorkonfigurierten Echtzeit-Trainingssimulationsdatenbank unter Verwendung der mehreren Schlüsselwörter, um Informationen zu identifizieren, die sich auf die eine oder die mehreren Abfragen beziehen, wobei die Informationen einer oder mehreren Webseiten von mehreren Webseiten zugehörig sind, und wobei sich die Informationen auf der einen oder den mehreren Webseiten basierend auf Standortkoordinaten der Informationen befinden;
Definieren, durch den Prozessor, automatisch verschiedener Gesten für die virtuelle animierte Figur basierend auf dem Kontext der einen oder der mehreren Abfragen, wobei die verschiedenen Gesten Aktionen und Ausdrücke umfassen, die der virtuellen animierten Figur zugehörig sind;
Ermöglichen, durch den Prozessor, der virtuellen animierten Figur, den Benutzer intuitiv zu führen, durch Zeigen wenigstens einer Geste der verschiedenen Gesten, die auf eine erste Information zeigt, die auf einer ersten Webseite der einen oder mehreren der Webseiten vorhanden ist, wobei die virtuelle animierte Figur bestimmte Registerkarten durch Klicken öffnet und erste Informationen auf den Webseiten hyperlinkt, die die Aktion und ein nachfolgendes Ergebnis des Öffnens durch Klicken für den Benutzer berichten, und wobei die ersten Informationen eine Teilmenge der Informationen sind; und
Initiieren, durch den Prozessor, der virtuellen animierten Figur, um sich von Standortkoordinaten der ersten Informationen zu Standortkoordinaten zweiter Informationen zu bewegen, die auf einer zweiten Webseite der einen oder der mehreren Webseiten vorhanden sind, um es der virtuellen animierten Figur zu ermöglichen, die eine oder die mehreren Abfragen des Benutzers intuitiv zu führen und die eine oder die mehreren Abfragen des Benutzers zu adressieren, wobei die zweiten Informationen eine andere Teilmenge der Informationen sind.

2. System zum Unterstützen eines Benutzers mehrerer Webseiten mit einer intuitiv reagierenden virtuellen animierten Figur basierend auf einer oder mehreren Abfragen des Benutzers, wobei das System Folgendes umfasst:
einen Prozessor;
einen Speicher, der mit dem Prozessor gekoppelt ist, wobei der Prozessor programmierte Anweisungen vollzieht, die in dem Speicher gespeichert sind, um die folgenden Schritte durchzuführen:
Empfangen, durch einen Prozessor, der einen oder der mehreren Abfragen von dem Benutzer in einem Textformat und/oder einem Sprachformat, wobei die eine oder die mehreren Abfragen in das Textformat umgewandelt werden, wenn die eine oder die mehreren Abfragen in dem Sprachformat empfangen werden;
Durchführen, durch den Prozessor, einer textbasierten Analyse der einen oder der mehreren Abfragen, wobei die textbasierte Analyse Folgendes umfasst:
Auswählen mehrerer Schlüsselwörter aus der einen oder den mehreren Abfragen; und
Ausführen einer Suche in einer vorkonfigurierten Echtzeit-Trainingssimulationsdatenbank unter Verwendung der mehreren Schlüsselwörter, um Informationen zu identifizieren, die sich auf die eine oder die mehreren Abfragen beziehen, wobei die Informationen einer oder mehreren Webseiten von mehreren Webseiten zugehörig sind, und wobei sich die Informationen auf der einen oder den mehreren Webseiten basierend auf Standortkoordinaten der Informationen befinden;
Definieren, durch den Prozessor, automatisch verschiedener Gesten für die virtuelle animierte Figur basierend auf dem Kontext der einen oder der mehreren Abfragen, wobei die verschiedenen Gesten Aktionen und Ausdrücke umfassen, die der virtuellen animierten Figur zugehörig sind;
Ermöglichen, durch den Prozessor, der virtuellen animierten Figur, den Benutzer intuitiv zu führen, durch Zeigen wenigstens einer Geste der verschiedenen Gesten, die auf eine erste Information zeigt, die auf einer ersten Webseite der einen oder mehreren der Webseiten vorhanden ist, wobei die virtuelle animierte Figur bestimmte Registerkarten durch Klicken öffnet und erste Informationen auf den Webseiten hyperlinkt, die die Aktion und ein nachfolgendes Ergebnis des Öffnens durch Klicken für den Benutzer berichten, und wobei die ersten Informationen eine Teilmenge der Informationen sind; und
Initiieren, durch den Prozessor, der virtuellen animierten Figur, um sich von Standortkoordinaten der ersten Informationen zu Standortkoordinaten zweiter Informationen zu bewegen, die auf einer zweiten Webseite der einen oder der mehreren Webseiten vorhanden sind, um es der virtuellen animierten Figur zu ermöglichen, die eine oder die mehreren Abfragen des Benutzers intuitiv zu führen und die eine oder die mehreren Abfragen des Benutzers zu adressieren, wobei die zweiten Informationen eine andere Teilmenge der Informationen sind.

## Revendications

1. Procédé destiné à aider un utilisateur parmi une pluralité de pages Web au moyen d'un personnage animé virtuel à réponse intuitive sur la base d'une ou de plusieurs requêtes de l'utilisateur, le procédé comprenant :
la réception, par un processeur, de la ou des requêtes de l'utilisateur dans un format texte et/ou un format vocal, la ou les requêtes étant converties au format texte, lorsque la ou les requêtes sont reçues dans le format vocal ;
le fait d'effectuer, par le processeur, une analyse à base de texte sur la ou les requêtes, l'analyse à base de texte comprenant,
la sélection d'une pluralité de mots-clés à partir de la ou des requêtes ; et
le fait de mener une recherche dans une base de données de simulation d'apprentissage en temps réel préconfigurée à l'aide de la pluralité de mots-clés afin d'identifier des informations relatives à la ou aux requêtes, les informations étant associées à une ou plusieurs pages Web parmi de multiples pages Web, et les informations étant situées sur la ou les pages Web sur la base des coordonnées d'emplacement des informations ;
la définition, par le processeur, de gestes différents automatiquement pour le personnage animé virtuel sur la base du contexte de la ou des requêtes, les différents gestes comprenant des actions et des expressions associées au personnage animé virtuel ;
le fait de permettre, par le processeur, au personnage animé virtuel de guider intuitivement l'utilisateur en montrant au moins un geste, parmi les différents gestes, pointant vers une première information présente sur une première page Web parmi la ou les pages Web, le personnage animé virtuel ouvrant par un clic sur des onglets spécifiques et des liens hypertexte de premières informations sur les pages Web narrant l'action et le résultat ultérieur du clic ouvert à l'utilisateur, et les premières informations étant un sous-ensemble des informations ; et
le lancement, par le processeur, du déplacement du caractère animé virtuel de coordonnées d'emplacement des premières informations à des coordonnées d'emplacement de secondes informations présentent sur une seconde page Web parmi la ou les pages Web afin de permettre au personnage animé virtuel de guider intuitivement et traiter la ou les requêtes de l'utilisateur, les secondes informations étant un autre sous-ensemble des informations.

2. Système destiné à aider un utilisateur parmi une pluralité de pages Web au moyen d'un personnage animé virtuel à réponse intuitive sur la base d'une ou de plusieurs requêtes de l'utilisateur, le système comprenant :
un processeur ;
une mémoire couplée au processeur, le processeur exécutant des instructions programmées stockées dans la mémoire afin d'effectuer les étapes consistant à :
recevoir, par un processeur, la ou les requêtes de l'utilisateur dans un format texte et/ou un format vocal, la ou les requêtes étant converties au format texte, lorsque la ou les requêtes sont reçues dans le format vocal ;
effectuer, par le processeur, une analyse à base de texte sur la ou les requêtes, l'analyse à base de texte comprenant :
la sélection d'une pluralité de mots-clés à partir de la ou les requêtes ; et
le fait de mener une recherche dans une base de données de simulation d'apprentissage en temps réel préconfigurée à l'aide de la pluralité de mots-clés afin d'identifier des informations relatives à la ou aux requêtes, les informations étant associées à une ou plusieurs pages Web parmi de multiples pages Web, et les informations étant situées sur la ou les pages Web sur la base des coordonnées d'emplacement des informations ;
la définition, par le processeur, de gestes différents automatiquement pour le personnage animé virtuel sur la base du contexte de la ou des requêtes, les différents gestes comprenant des actions et des expressions associées au personnage animé virtuel ;
le fait de permettre, par le processeur, au personnage animé virtuel de guider intuitivement l'utilisateur en montrant au moins un geste, parmi les différents gestes, pointant vers une première information présente sur une première page Web parmi la ou les pages Web, le personnage animé virtuel ouvrant par un clic sur des onglets spécifiques et des liens hypertexte de premières informations sur les pages Web narrant l'action et le résultat ultérieur du clic ouvert à l'utilisateur, et les premières informations étant un sous-ensemble des informations ; et
le lancement, par le processeur, du déplacement du caractère animé virtuel de coordonnées d'emplacement des premières informations à des coordonnées d'emplacement de secondes informations présentent sur une seconde page Web parmi la ou les pages Web afin de permettre au personnage animé virtuel de guider intuitivement et traiter la ou les requêtes de l'utilisateur, les secondes informations étant un autre sous-ensemble des informations.
